# FASCICULE DE BREVET EUROPEEN

(11) **EP 0 511 051 B1**
(45) Date de publication et mention de la délivrance du brevet: **30.11.1994**
(21) Numéro de dépôt: 92401062.2
(22) Date de dépôt: 15.04.1992
(51) Int. Cl.: F16D 23/14

(54) **Butée d'embrayage**
Kupplungsausrücklager
Clutch release bearing

(30) Priorité: 22.04.1991 FR 9104944
(43) Date de publication de la demande: 28.10.1992
(73) Titulaire: SKF FRANCE, F-92142 Clamart Cédex (FR)
(72) Inventeur: Caron, Fabrice, F-78210 Montigny-le-Bretonneux (FR)
(74) Mandataire: Casalonga, Axel

(56) Documents cités:
- FR-A- 2 109 947
- FR-A- 2 540 950
- GB-A- 2 045 382

## Description

La présente invention est relative à une butée d'embrayage du type comprenant un palier à roulement dont l'une des bagues entre en contact permanent avec un organe d'embrayage et en particulier avec le diaphragme de l'embrayage. La butée d'embrayage comprend également une douille de guidage par rapport à laquelle le palier peut se déplacer radialement grâce à des moyens d'auto-centrage assurant l'alignement de la butée d'embrayage lors des opérations de débrayage. La douille de guidage peut coulisser axialement par rapport à un tube-guide sous l'action d'un organe de commande également appelé fourchette de débrayage, présentant des doigts d'extrémité capables de venir en contact avec une surface d'une plaque d'appui métallique solidaire de la collerette radiale de la douille de guidage.

Lors du fonctionnement de ce type de butée d'embrayage, dit à contact constant, c'est-à-dire dont la bague tournante est en contact permanent avec le diaphragme de l'embrayage, le contact se fait avec une légère précharge à l'état embrayé et avec une charge plus importante de débrayage pendant l'opération de débrayage.

Les moyens d'auto-centrage connus ne permettent pas de remédier complètement aux problèmes découlant des imperfections de fabrication et d'assemblage de la butée par rapport au mécanisme d'embrayage. C'est ainsi que lorsque la butée fonctionne à l'état de "repos", c'est-à-dire avec seulement la légère précharge de contact contre le diaphragme de l'embrayage, tout défaut de voilage dudit diaphragme se traduit par des oscillations de l'ensemble de la butée sur le tube-guide, du fait du jeu existant entre le tube-guide et l'alésage de la douille de guidage. Ces oscillations se transmettent à la fourchette de débrayage en générant du bruit, en entraînant l'usure des zones de contact, et en produisant des vibrations qui remontent jusqu'à la pédale d'embrayage par l'intermédiaire du câble de commande. Ces oscillations provoquent également des matages et des usures des extrémités de la partie tubulaire de la douille de guidage. Un défaut d'orthogonalité entre le diaphragme et le tube-guide se traduit en outre par des charges circonférentiellement irrégulières sur la butée. Il en résulte des usures mal réparties et des frottements des billes du palier à roulement sur les pistes dans certaines zones.

Lorsque la butée fonctionne sous charge lors du débrayage, ces phénomènes vibratoires disparaissent, la flexion des lames du diaphragme absorbant en partie les défauts de rotation. Cependant, s'il existe un défaut d'orthogonalité entre le diaphragme et l'axe du tube-guide, la partie tubulaire de la douille de guidage reste soumise à des efforts de mise en dévers sur le tube-guide qui provoquent des usures locales de l'alésage de la douille de guidage et du tube-guide.

Les défauts de construction et de montage du diaphragme par rapport au tube-guide affectent donc particulièrement les butées à contact constant, que le mécanisme soit à l'état embrayé, la butée étant en légère précharge ou en cours de débrayage, la butée étant sous charge.

Pour éviter ce type d'inconvénient et pour résoudre les problèmes d'excentrage et d'inclinaison du mécanisme d'embrayage par rapport à la butée, il faut que le palier de roulement de la butée ait un certain degré de liberté non seulement radial mais aussi angulaire par rapport à la douille de guidage afin de pouvoir "absorber" les défauts d'orthogonalité du diaphragme par rapport à l'axe de coulissement de la douille de guidage sur le tube-guide.

De cette manière la butée peut s'autoaligner et s'autocentrer sur le diaphragme. Par ailleurs, une partie des vibrations et oscillations se trouvent arrêtées et leur propagation aux autres éléments tels que la douille de guidage, la fourchette de débrayage etc. est évitée.

La demande de brevet français 2 540 950 (NSK) tente de résoudre ces problèmes par l'adjonction d'un organe d'alignement auxiliaire interposé entre la bague extérieure du palier à roulement et une collerette radiale solidaire de la douille de guidage. L'organe d'alignement , qui comporte deux faces sphériques, est donc placé à un endroit éloigné du point de contact entre la butée et le diaphragme ce qui entraîne des déplacements importants dans la zone de rotule sphérique. De plus aucun moyen spécifique supplémentaire n'est prévu pour l'auto-centrage radial du palier à roulement. Enfin l'encombrement axial du montage est relativement important et la solidarisation axiale du palier à roulement avec la douille de guidage est complexe.

La demande de brevet français 2 109 947 (SKF) prévoit une bague de débrayage entrant en contact avec le diaphragme et venant s'appuyer contre la bague intérieure du palier à roulement par une surface sphérique. Là encore aucun moyen spécifique n'est prévu pour l'auto-centrage radial du palier à roulement. De plus l'encombrement axial de l'ensemble est encore trop important. Enfin l'assemblage des divers éléments est relativement malaisé.

La présente invention a pour objet une butée d'embrayage fonctionnant en contact constant avec précharge axiale dans laquelle le palier à roulement puisse se déplacer à la fois dans un plan radial et de façon angulaire pour "absorber" les défauts d'orthogonalité du diaphragme par rapport à l'axe de coulissement de la douille de guidage sur le tube-guide et ce, d'une façon simple et économique, en mettant en oeuvre un nombre réduit de pièces faciles à assembler.

La butée d'embrayage selon l'invention comprend un palier à roulement muni de bagues extérieure et intérieure, la bague extérieure étant adaptée pour entrer en contact permanent avec un organe d'embrayage, une douille de guidage pouvant coulisser axialement par rapport à un tube-guide sous l'action d'un organe de commande et des moyens élastiques d'auto-centrage entre le palier à roulement et la douille de guidage. Une bague d'alignement auxiliaire est montée dans l'alésage de la bague intérieure du palier à roulement du côté de l'organe d'embrayage, en contact axial d'une part avec une collerette de ladite bague intérieure, dirigée vers l'axe de la butée et d'autre part avec l'extrémité frontale de la douille de guidage. La bague d'alignement présente une face plane d'auto-centrage radial et une face sphérique de débattement angulaire.

Grâce à la position de la bague d'alignement auxiliaire le plus près possible de la zone de contact entre la butée et le diaphragme, le débattement et donc l'usure sont considérablement réduits dans la zone de la rotule sphérique. Le rayon de la sphère est de préférence choisi suffisamment grand pour favoriser l'effet de rotule et éviter tout coincement de la bague d'alignement auxiliaire. Pour minimiser l'usure on donne en outre de préférence à la zone de contact sphérique, une surface aussi grande que possible.

Dans un premier mode de réalisation, la collerette de la bague intérieure est radiale et en contact avec la face plane d'auto-centrage radial de la bague d'alignement auxiliaire. L'extrémité frontale de la douille de guidage présente un profil sphérique de même rayon que la face sphérique de débattement angulaire de la bague d'alignement auxiliaire et en contact avec cette dernière.

Dans un autre mode de réalisation, la collerette de la bague intérieure présente un profil sphérique de même rayon que la face sphérique de débattement angulaire de la bague d'alignement auxiliaire et en contact avec cette dernière. L'extrémité frontale de la douille de guidage est plane et radiale, en contact avec la face plane d'auto-centrage radial de la bague d'alignement auxiliaire.

Toujours pour minimiser l'usure, la bague d'alignement auxiliaire est de préférence réalisée en matériau à faible frottement tel qu'une matière synthétique faiblement chargée en fibres de verre avec adjonction de bisulfure de molybdène par exemple.

Il peut également être envisagé de prévoir une pellicule de graisse sur les deux faces de la bague d'alignement auxiliaire de façon non seulement à réduire le frottement lors du fonctionnement, mais également à faciliter l'assemblage, la bague auxiliaire d'alignement restant alors collée par la graisse sur la face frontale externe de la douille de guidage avant le montage du palier à roulement sur la douille de guidage.

Les moyens élastiques d'auto-centrage peuvent comprendre une pluralité de languettes élastiques sensiblement axiales, solidaires de la douille de guidage et en contact avec l'alésage de la bague intérieure du palier à roulement.

En variante, les moyens élastiques d'auto-centrage peuvent comprendre un manchon muni de nervures élastiques sensiblement axiales en contact avec la périphérie de la douille de guidage, le manchon étant monté dans l'alésage de la bague intérieure du palier à roulement.

L'invention a également pour objet une butée d'embrayage du type indiqué précédemment et dont l'assemblage se fait de manière particulièrement simple. A cet effet, la butée d'embrayage selon l'invention comporte en outre un flasque d'étanchéité pour le palier à roulement et la douille de guidage comprend au moins deux organes élastiques capables de coopérer avec un rebord du flasque d'étanchéité en vue de l'assemblage par encliquetage du palier à roulement sur la douille de guidage avec interposition de la bague d'auto-alignement auxiliaire.

De cette manière, l'assemblage se fait par simple encliquetage axial du palier à roulement sur l'ensemble constitué par la douille de guidage et la bague d'alignement auxiliaire.

Bien entendu cette solidarisation axiale entre le palier à roulement et la douille de guidage ne sert que lors du transport, de la manipulation et du montage de la butée d'embrayage sur le véhicule. Une fois la butée d'embrayage montée sur le tube-guide et en précharge sur le diaphragme, les moyens de solidarisation axiale par encliquetage ne jouent plus aucun rôle.

L'invention sera mieux comprise à l'étude de quelques modes de réalisation décrits à titre d'exemples nullement limitatifs et illustrés par les dessins annexés sur lesquels :
la figure 1 est une vue en coupe d'une butée d'embrayage selon l'invention montée sur un véhicule;
la figure 2 est une demi-vue en coupe analogue à celle de la figure 1 d'une première variante de l'invention; et
la figure 3 est une demi-coupe selon la figure 1 d'une autre variante de l'invention.

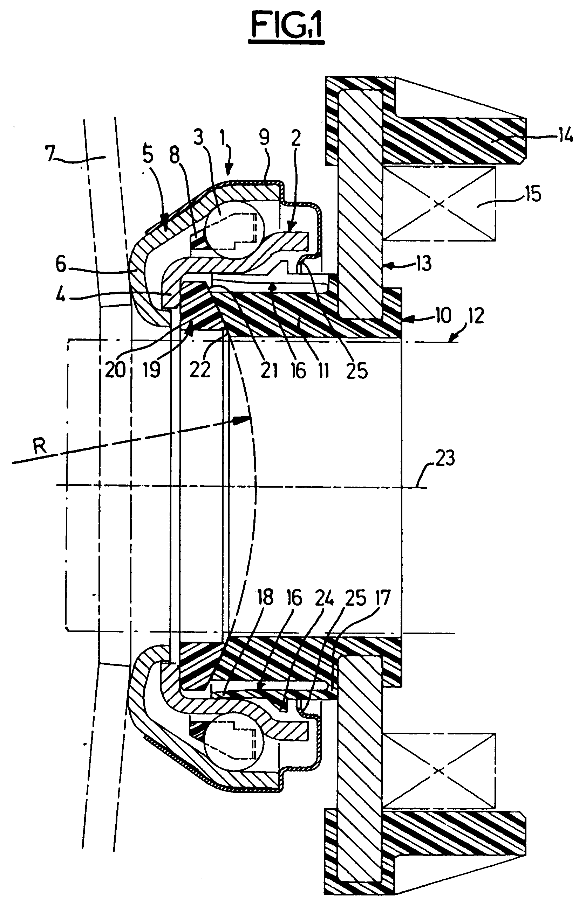

Telle qu'elle est représentée sur les figures et en particulier sur la figure 1, la butée d'embrayage conforme à l'invention comprend un palier à roulement référencé 1 dans son ensemble muni d'une bague intérieure de roulement 2 à paroi mince réalisée par emboutissage d'un tube ou d'une tôle présentant un chemin de roulement pour une rangée de billes 3. La bague intérieure 2 présente une collerette radiale 4 dirigée vers l'intérieur c'est-à-dire vers l'axe de la butée. Le roulement 1 se complète par une bague extérieure 5 également à paroi mince réalisée par emboutissage d'une tôle ou d'un tube et qui comporte une portion approximativement torique 6 qui est maintenue en contact constant avec la surface du diaphragme 7 d'un embrayage dont les autres éléments ne sont pas représentés sur les figures. Les billes 3 sont maintenues par une cage 8, le roulement étant protégé par un flasque d'étanchéité 9 fixé autour de la bague extérieure 5.

Une douille de guidage référencée 10 dans son ensemble et réalisée en matière synthétique, comprend une portion cylindrique 11 dont l'alésage peut glisser sur la surface externe d'un tube-guide 12 assurant le guidage du déplacement longitudinal de la butée lors de chaque opération de débrayage. La douille de guidage 10 comporte une plaque d'appui métallique radiale 13 sur laquelle ont été surmoulées la portion cylindrique 11 qui s'étend au moins du côté du palier à roulement et des excroissances axiales 14 diamètralement opposées par rapport à l'axe de la butée et disposées du côté opposé au palier à roulement. Les doigts d'une fourchette de débrayage 15 schématisés sur la figure 1 sous la forme de deux carrés exercent une force axiale sur la face de la plaque d'appui 13 opposée au palier à roulement 1. Les doigts 15 sont en outre maintenus par les excroissances 14 de la douille de guidage 10.

La douille de guidage 10 comprend une couronne de languettes élastiques 16 dirigées axialement. Chaque languette élastique 16 est reliée par sa base 17 au voisinage de la plaque d'appui 13 et s'étend sensiblement axialement en s'éloignant de ladite plaque d'appui 13 jusqu'à une extrémité libre 18 de façon à pouvoir fléchir radialement. L'alésage de la bague intérieure 2 du palier à roulement 1 est en contact avec les extrémités 18 des différentes languettes élastiques 16. De cette manière il apparaît que le palier à roulement 1 se trouve monté de manière élastique autour de la portion cylindrique 11 de la douille de guidage 10.

Une bague d'alignement auxiliaire 19 est montée dans l'alésage de la bague intérieure 2 du palier à roulement 1 au voisinage du diaphragme 7. Dans le mode de réalisation illustré sur la figure 1 la bague d'alignement auxiliaire comprend une face plane 20 en contact de frottement avec une face plane correspondante de la collerette radiale 4 de la bague intérieure 2.

La face opposée 21 de la bague d'alignement auxiliaire 19 présente au contraire un profil sphérique de rayon R en contact avec une face sphérique 22 de même rayon de l'extrémité frontale de la portion cylindrique 11 de la douille de guidage 10.

En d'autres termes, la bague d'alignement auxiliaire 19 se trouve logée entre l'extrémité frontale 22 sphérique de la portion cylindrique 11 et la collerette radiale plane 4 de la bague intérieure 2.

Le rayon R est choisi suffisamment important pour éviter tout effet de coin qui pourrait entraîner un coincement de la bague auxiliaire 19 entre la collerette radiale 4 et la surface sphérique 22.

Lorsque la butée est montée sur le tube-guide 12 comme illustré sur la figure 1 et maintenue en contact constant avec le diaphragme 7 l'existence de la bague d'alignement auxiliaire 19 permet de résoudre les problème d'excentrage et d'inclinaison de la butée en absorbant les défauts d'orthogonalité du diaphragme 7 par rapport à l'axe de coulissement 23.

L'auto-centrage élastique se fait à la fois dans un plan purement radial grâce aux languettes élastiques 16 et par contact de frottement entre les faces radiales respectives de la bague d'alignement auxiliaire 19 et de la collerette radiale 4. Des mouvements de rotule sphérique permettant un alignement angulaire sont en outre rendus possible par les faces sphériques de la bague d'alignement auxiliaire 19 et de l'extrémité frontale de la douille de guidage 10. Grâce à la position particulière de la bague d'alignement auxiliaire 19 le plus près possible de la portion torique 6 de la bague extérieure 5 en contact avec le diaphragme 7 le débattement et donc l'usure des surfaces de rotule sphérique sont réduits au minimum.

Comme illustré sur la figure 1 au moins deux languettes élastiques 16 comportent en outre sur leur face extérieure des ergots en saillie 24 capables de coopérer avec un rebord incliné 25 du flasque d'étanchéité 9. De cette manière il est possible lors de l'assemblage du palier à roulement 1 sur l'ensemble constitué par la douille de guidage 10 et la bague d'alignement auxiliaire 19 de solidariser par simple encliquetage axial du rebord 25 sur les ergots 24 le palier à roulement 1 par rapport à la douille de guidage 10. Les éléments ainsi solidarisés peuvent alors être plus facilement transportés et manipulés avant le montage de l'ensemble sur le tube-guide 12. Bien entendu après montage ces moyens d'encliquetage ne jouent plus aucun rôle et ne sont plus en contact les uns avec les autres comme on peut le voir sur la figure 1.

Pour réduire l'usure des surfaces de frottement de la bague d'alignement auxiliaire celle-ci, au même titre que la douille de guidage 10, est de préférence réalisée en un matériau à faible coefficient de frottement tel que par exemple une matière synthétique moulée rigide chargée en fibres de verre avec adjonction de bisulfure de molybdène par exemple.

Il est également possible de prévoir l'application d'une pellicule de graisse sur les deux faces 20 et 21 de la bague d'alignement auxiliaire 19 ce qui permet non seulement de réduire le frottement lors du fonctionnement mais également de faciliter l'assemblage, la bague d'alignement 19 restant en quelque sorte collée par la pellicule de graisse sur la face frontale 22 de la portion cylindrique 11 de la douille de guidage 10 avant le montage du palier à roulement 1.

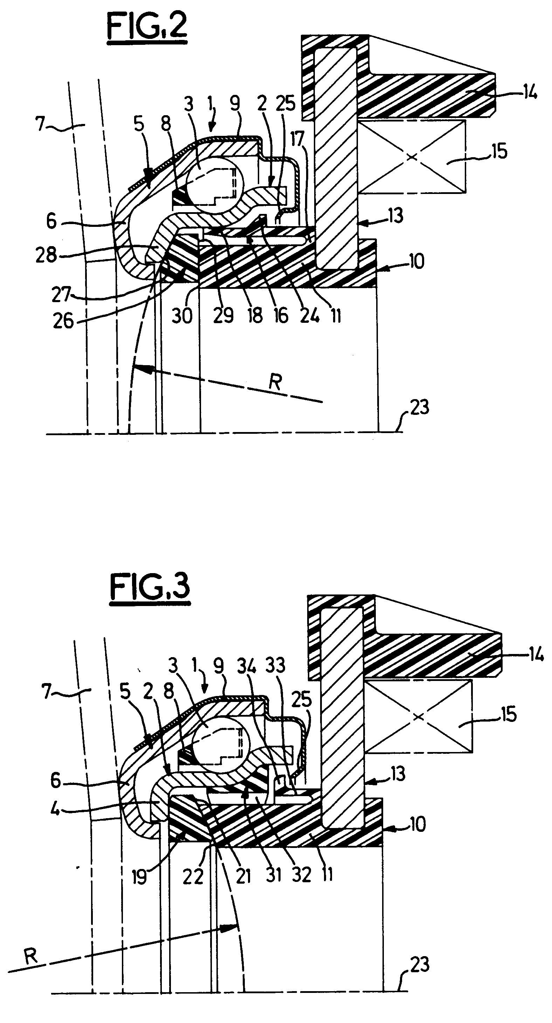

Les autres modes de réalisation illustrés sur les figures 2 et 3 reprennent une partie des pièces déjà illustrées sur la figure 1 et qui portent les mêmes références sur les figures 2 et 3.

Dans le mode de réalisation illustré sur la figure 2 la bague d'alignement auxiliaire 26 comporte une face de profil sphérique 27 en contact avec une zone sphérique correspondante d'une collerette 28 de la bague intérieure 2, la collerette 28 étant comme précédemment dirigée vers l'axe de la butée sans être bien entendu exactement radiale comme dans le mode de réalisation de la figure 1.

La face opposée 29 de la bague d'alignement auxiliaire 26 est plane et radiale et vient en contact avec la face frontale 30 également radiale de la portion cylindrique 11 de la douille de guidage 10. Les zones sphériques de rotule se trouvent dans ce mode de réalisation encore plus proches du diaphragme 7 réduisant encore les débattements angulaires par rapport au mode de réalisation de la figure 1.

Le mode de réalisation de la figure 3 se différencie du mode de réalisation de la figure 1 uniquement par la structure des moyens d'auto-centrage. Dans ce mode de réalisation en effet, un manchon en matière élastique souple 31 par exemple réalisé en élastomère ou en caoutchouc naturel est disposé à l'intérieur de l'alésage de la bague intérieure 2. Le manchon 31 comporte une pluralité de nervures 32 parallèles à l'axe de la butée, dirigées vers l'intérieur. Le bord libre des nervures 32 entre en contact avec la surface extérieure de la portion cylindrique 11 de la douille de guidage 10.

La solidarisation du palier à roulement 1 pendant les opérations de transport et de manutention est faite ici par encliquetage du rebord 25 sur deux doigts élastiques 33 dont l'un seulement est visible sur la figure 3 et qui sont munis d'une extrémité en saillie 34, les doigts 33 s'étendant sensiblement axialement depuis la zone de la douille de guidage 10 recevant la bague d'appui 13, en direction du palier à roulement 1. L'extrémité 34 des doigts élastiques 33 est libre de façon à permettre aux doigts élastiques 33 de fléchir radialement lors de l'encliquetage sur le rebord 25 du flasque d'étanchéité 9.

La structure particulière des moyens de l'invention permet d'assurer, dans une butée d'embrayage à contact constant, un fonctionnement dénué de bruit et de vibrations grâce à une liberté de mouvement du palier à roulement par rapport à la douille de guidage à la fois radialement et angulairement.

## Revendications

1. Butée d'embrayage du type comprenant un palier à roulement (1) muni de bagues extérieure (5) et intérieure (2), la bague extérieure (5) étant adaptée pour entrer en contact permanent avec un organe d'embrayage (7), une douille de guidage (10) pouvant coulisser axialement par rapport à un tube-guide (12) sous l'action d'un organe de commande (15) et une bague d'alignement auxiliaire (19, 26), caractérisée par le fait que des moyens élastiques d'auto-centrage sont prévus entre le palier à roulement (1) et la douille de guidage (10), et que la bague d'alignement auxiliaire (19, 26) est montée dans l'alésage de la bague intérieure (2) du palier à roulement du côté de l'organe d'embrayage (7), en contact axial d'une part avec une collerette (4, 28) de ladite bague intérieure (2), dirigée vers l'axe de la butée et d'autre part avec l'extrémité frontale de la douille de guidage (10), ladite bague d'alignement présentant une face plane d'auto-centrage radial et une face sphérique de débattement angulaire.

2. Butée d'embrayage selon la revendication 1, caractérisée par le fait que la collerette (4) de la bague intérieure (2) est radiale et en contact avec la face plane d'auto-centrage radial (20) de la bague d'alignement auxiliaire, l'extrémité frontale de la douille de guidage présentant un profil sphérique (22) de même rayon que la face sphérique de débattement angulaire de la bague d'alignement auxiliaire (19) et en contact avec cette dernière.

3. Butée d'embrayage selon la revendication 1, caractérisée par le fait que la collerette (28) de la bague intérieure (2) présente un profil sphérique de même rayon que la face sphérique (27) de débattement angulaire de la bague d'alignement auxiliaire (26) et en contact avec cette dernière, l'extrémité frontale (30) de la douille de guidage étant plane et radiale, en contact avec la face plane (29) d'auto-centrage radial de la bague d'alignement auxiliaire (26).

4. Butée d'embrayage selon l'une quelconque des revendications précédentes, caractérisée par le fait que la bague d'alignement auxiliaire est réalisée en matériau à faible frottement tel qu'une matière synthétique faiblement chargée en fibres de verre avec adjonction de bisulfure de molybdène.

5. Butée d'embrayage selon l'une quelconque des revendications précédentes, caractérisée par le fait qu'une pellicule de graisse est appliquée sur les faces de la bague d'alignement auxiliaire.

6. Butée d'embrayage selon l'une quelconque des revendications précédentes, caractérisée par le fait que les moyens élastiques d'auto-centrage comprennent une pluralité de languettes élastiques (16) sensiblement axiales, solidaires de la douille de guidage et en contact avec l'alésage de la bague intérieure du palier à roulement.

7. Butée d'embrayage selon l'une quelconque des revendications 1 à 5, caractérisée par le fait que les moyens élastiques d'auto-centrage comprennent un manchon (31) muni de nervures élastiques (32) sensiblement axiales en contact avec la périphérie de la douille de guidage, le manchon (21) étant monté dans l'alésage de la bague intérieure du palier à roulement.

8. Butée d'embrayage selon l'une quelconque des revendications précédentes comportant en outre un flasque d'étanchéité (9) du palier à roulement (1), caractérisée par le fait que la douille de guidage comprend au moins deux organes élastiques (24, 34) capables de coopérer avec un rebord (25) du flasque d'étanchéité en vue de l'assemblage par encliquetage du palier à roulement (1) sur la douille de guidage (10) avec interposition de la bague d'alignement auxiliaire.

9. Butée d'embrayage selon l'une quelconque des revendications précédentes, caractérisée par le fait que la douille de guidage (10) comprend une plaque d'appui métallique (13) sur laquelle l'organe de commande (15) peut exercer un effort axial lors d'une opération de débrayage.

## Claims

1. A clutch stop of the type comprising a rolling bearing (1) provided with an outer race (5) and an inner race (2), the outer race (5) being suitable for coming into continuous contact with a clutch element (7), a guide bush (10) axially slidable relative to a guide tube (12) under the action of a control element (15) and an auxiliary alignment ring (19, 26),
characterised in that elastic self-centring means are provided between the rolling bearing (1) and the guide bush (10) and in that the auxiliary alignment ring (19, 26) is mounted in the bore of the inner race (2) of the rolling bearing on the clutch element (7) side for axial contact, on the one hand, with a flange (4, 28) of the said inner race (2), which flange is directed towards the axis of the stop, and, on the other hand, with the front end of the guide bush (10), the said alignment ring having a planar radial self-centring surface and a spherical surface for angular deflection.

2. A clutch stop according to claim 1,
characterised in that the flange (4) of the inner race (2) is radial and is in contact with the planar radial self-centring surface (20) of the auxiliary alignment ring, the front end of the guide bush having a spherical profile (22) with the same radius as the spherical angular deflection surface of the auxiliary alignment ring (19) and being in contact with the latter.

3. A clutch stop according to claim 1,
characterised in that the flange (28) of the inner race (2) has a spherical profile with the same radius as the spherical angular deflection surface (27) of the auxiliary alignment ring (26) and is in contact with the latter, the front end (30) of the guide bush being planar and radial and in contact with the planar radial self-centring surface (29) of the auxiliary alignment ring (26).

4. A clutch stop according to any one of the preceding claims, characterised in that the auxiliary alignment ring is manufactured in low-friction material such as a synthetic material slightly reinforced with glass fibres with an addition of molybdenum disulphide.

5. A clutch stop according to any one of the preceding claims, characterised in that a film of grease is applied to the surfaces of the auxiliary alignment ring.

6. A clutch stop according to any one of the preceding claims, characterised in that the elastic self-centring means comprise a plurality of substantially axial elastic tongues (16) solidly connected to the guide bush and in contact with the bore of the inner race of the rolling bearing.

7. A clutch stop according to any one of claims 1 to 5, characterised in that the elastic self-centring means comprise a sleeve (31) provided with substantially axial elastic ribs (32) in contact with the periphery of the guide bush, the sleeve (21) being mounted in the bore of the inner race of the rolling bearing.

8. A clutch stop according to any one of the preceding claims, further comprising a sealing flange (9) for the rolling bearing (1), characterised in that the guide bush comprises at least two elastic elements (24, 34) capable of cooperating with a shoulder (25) of the sealing flange for the purpose of assembly by the latching of the rolling bearing (1) on to the guide bush (10) with the interposition of the auxiliary alignment ring.

9. A clutch stop according to any one of the preceding claims, characterised in that the guide bush (10) comprises a metal support plate (13) on which the control element (15) can exert axial pressure during a disengaging operation.

## Patentansprüche

1. Kupplungsausrücker von der Bauart, die ein Wälzlager (1) mit einem Außenring (5) und einem Innenring (2) aufweist, wobei der Außenring (5) dazu eingerichtet ist, ständig mit einem Bauteil (7) der Kupplung in Berührung zu stehen, mit einer Führungsbüchse (10), die unter der Wirkung eines Betätigungsgliedes (15) gegenüber einem Führungsrohr (12) axial verschoben werden kann und mit einem Hilfsausgleichsring (19, 26), dadurch gekennzeichnet, daß zwischen dem Wälzlager (1) und der Führungsbüchse (10) elastische Mittel zur Selbstzentrierung vorgesehen sind und daß der Hilfausgleichsring (19, 26) auf der Seite des Bauteiles (7) der Kupplung in dem Durchlaß des Innenrings (2) des Wälzlagers angeordnet ist und dabei einerseits an einem auf die Achse des Ausrückers gerichteten Flansch (4, 28) des Innenrings (2) und andererseits an der Stirnseite der Führungsbüchse (10) anliegt, wobei der Ausgleichsring eine plane Fläche für die radiale Selbstzentrierung und eine kugelförmige Fläche für den Winkelversatz aufweist.

2. Kupplungausrücker nach Anspruch 1, dadurch gekennzeichnet, daß der Flansch (4) des Innenrings (2) in radialer Richtung weist und an der planen Fläche (20) zur radialen Selbstzentrierung des Hilfsausgleichsrings anliegt, daß die Stirnseite der Führungsbüchse ein kugelförmiges Profil (22) mit demselben Radius wie die kugelförmige Fläche für den Winkelversatz des Hilfsausgleichsrings (19) aufweist und an diesem anliegt.

3. Kupplungsausrücker nach Anspruch 1, dadurch gekennzeichnet, daß der Flansch (28) des Innenrings (2) ein kugelförmiges Profil mit demselben Radius wie die kugelförmige Fläche (27) des Hilfsrings (26) aufweist und an diesem anliegt, und daß die Stirnseite (30) der Führungsbüchse plan ist, in radiale Richtung weist und an der planen Fläche (29) für die radiale Selbstzentrierung des Hilfsausgleichsrings (26) anliegt.

4. Kupplungsausrücker nach einem der vorstehenden Ansprüche, dadurch gekennzeichnet, daß der Hilfsausgleichsring aus einem Material mit kleinem Reibungskoeffizienten hergestellt ist, beispielsweise aus Kunststoff, der in geringem Umfang mit Glasfasern unter Zugabe von Molybdändisulfid verstärkt ist.

5. Kupplungsausrücker nach einem der vorstehenden Ansprüche, dadurch gekennzeichnet, daß auf die Flächen des Hilfsausgleichsrings eine Fettschicht aufgebracht ist.

6. Kupplungsausrücker nach einem der vorstehenden Ansprüche, dadurch gekennzeichnet, daß die elastischen Mittel zur Selbstzentrierung mehrere im wesentlichen axiale elastische Zungen (16) aufweisen, die mit der Führungsbüchse verbunden sind und den Durchlaß des Innenrings des Wälzlagers berühren.

7. Kupplungsausrücker nach einem der Ansprüche 1 bis 5, dadurch gekennzeichnet, daß die elastischen Mittel zur Selbstzentrierung eine Hülse (31) aufweisen, die mit elastischen, im wesentlichen axialen Rippen (32) versehen ist, die den Umfang der Führungsbüchse berühren, und daß die Hülse (31) in dem Durchlaß des Innenrings des Wälzlagers angeordnet ist.

8. Kupplungsausrücker nach einem der vorstehenden Ansprüche, der zusätzlich eine Abdichtkappe (9) für das Wälzlager (1) aufweist, dadurch gekennzeichnet, daß die Führungsbüchse wenigstens zwei elastische Glieder (24, 34) aufweist, die geeignet sind, mit einem Rand (25) der Abdichtkappe zusammenzuwirken, um das Wälzlager (1) durch Verrasten auf der Führungsbüchse (10) zu haltern, wobei der Hilfsausgleichsring zwischen dem Wälzlager (1) und der Führungsbüchse (10) angeordnet ist.

9. Kupplungausrücker nach einem der vorstehenden Ansprüche, dadurch gekennzeichnet, daß die Führungsbüchse (10) eine Druckplatte (13) aus Metall aufweist, auf die das Betätigungsorgan (15) bei einem Auskuppelvorgang eine axiale Kraft ausüben kann.
